# EUROPEAN PATENT APPLICATION

(11) **EP 4 607 147 A2**
(43) Date of publication of application: **27.08.2025**
(21) Application number: 24209055.3
(22) Date of filing: 25.10.2024
(51) Int. Cl.: G01C 15/00

(54) **LASER LEVEL**

(30) Priority: 26.10.2023 US 202363593471 P
(71) Applicant: Techtronic Cordless GP, Anderson, SC 29621 (US)
(72) Inventor: YEOMANS, Kyle B., Anderson 29621 (US); LOMBARDI, Keith, Anderson 29621 (US); PARSONS, II John D., Anderson 29621 (US); VAN WYK, Sage D., Anderson 29621 (US); GROVES, Jeffrey, Anderson 29621 (US); MISTRY, Sajan Arvindkumar, Anderson 29621 (US); BURNEY, Collin C., Anderson 29621 (US); WACKER, II Charles M., Anderson 29621 (US); EVATT, Thomas, Anderson 29621 (US); MERTEL, Brian D., Anderson 29621 (US)
(74) Representative: Meissner Bolte Partnerschaft mbB

(57) **Abstract**

A laser level mount includes a mount configured to engage a support to couple the laser level mount for secure use of the laser level mount, and a base that is coupled to the mount. The base is configured to support a laser level for movement of the laser level relative to the mount along a first axis and rotation of the laser level about a second axis that is parallel to the first axis and a third axis that is perpendicular to the first axis.

## Description

### TECHNICAL FIELD

The present invention relates to a level, and more particularly to a laser level.

### BACKGROUND

Laser levels are useful in the construction industry to ensure plumb and level construction and alignment of, for instance, framing, flooring, hanging articles, etc.

### SUMMARY

The subject matter provides, in one aspect, a laser level having horizontal macro-adjustability.

The subject matter provides, in another aspect, a laser level having both vertical and horizontal micro-adjustability.

The subject matter provides, in another aspect, a laser level having a mount to which a level module is removably couplable.

The subject matter provides, in another aspect, a laser level having a gimble mount for self-leveling.

The subject matter provides, in another aspect, a laser level mount including a mount configured to engage a support to couple the laser level mount for secure use of the laser level mount and a base coupled to the mount. The base is configured to support the laser level for movement of the laser level relative to the mount along a first axis and rotation of the laser level about a second axis that is parallel to the first axis and a third axis that is perpendicular to the first axis.

The subject matter provides, in another aspect, a laser level mount including a mount configured to engage a support to couple the laser level mount for secure use of the laser level mount, and a base coupled to the mount. The base includes a translation structure configured to translate the laser level along a first axis and a rotation structure configured to rotate the laser level about a second axis.

The subject matter provides, in another aspect, a laser level mount including a mount configured to engage a support structure, and a base coupled to the mount and configured to support a laser level. The base is configured to translate the laser level along a first axis, rotate the laser level in a plane perpendicular to the first axis and rotate the laser level about a second axis that is perpendicular to the first axis.

Other features and aspects of the invention will become apparent by consideration of the following detailed description and accompanying drawings.

### BRIEF DESCRIPTION OF THE DRAWINGS

FIG. 1 is a perspective view of a level according to an embodiment of the disclosure.
FIG. 2 is a side view of the level of FIG. 1, including a rotation plane.
FIG. 3 is a perspective view of the level of FIG. 1, including a rotation plane.
FIG. 4 is a perspective view of the level of FIG. 1, including the mount.
FIG. 5 is a perspective view of the level of FIG. 1, including the mount.
FIG. 6 is a perspective view of a level according to another embodiment, including another embodiment of a mount.
FIG. 7 is a perspective view of the level of FIG. 1, including the level module with a portion of the level module removed.
FIG. 8 is section view of the level of FIG. 1.
FIG. 9 is a schematic view of an embodiment of a level module, including a gimble mount.
FIG. 10 is a perspective view of the level module illustrating operation of the level module, including translation in a horizontal direction.
FIG. 11 is a perspective view of the level module illustrating operation of the module, including translation in a vertical direction.
FIG. 12 is perspective view of a laser level bracket according to an embodiment of the disclosure.
FIG. 13 is a side view of the laser level bracket according to an embodiment of the disclosure.
FIG. 14 is a top view of the laser level bracket according to an embodiment of the disclosure.
FIG. 15 is a cross-section view of the laser level bracket taken along line 4-4 in FIG. 14 according to an embodiment of the disclosure.
FIG. 16 is a bottom view of the laser level bracket according to an embodiment of the disclosure.
FIG. 17 is another bottom view of the laser level bracket according to an embodiment of the disclosure.
FIG. 18 is a rear view of the laser level bracket according to an embodiment of the disclosure.
FIG. 19 is another side view of the laser level bracket according to an embodiment of the disclosure.
FIG. 20 is a front view of the laser level bracket according to an embodiment of the disclosure.
FIG. 21 is another side view of the laser level bracket according to an embodiment of the disclosure.
FIG. 22 is another front view of the laser level bracket according to an embodiment of the disclosure.
FIG. 23 is yet another front view of the laser level bracket according to an embodiment of the disclosure.
FIG. 24 is a perspective view of an elevator assembly for the laser level bracket according to an embodiment of the disclosure.
FIG. 25 is a front view of the elevator assembly according to an embodiment of the disclosure.
FIG. 26 is a cross-section view of the elevator assembly according to an embodiment of the disclosure taken along line 15-15 of FIG. 25.
FIG. 27 is an exploded view of the elevator assembly according to an embodiment of the disclosure.
FIG. 28 is a top view of a support plate for the elevator assembly according to an embodiment of the disclosure.
FIG. 29 is a bottom view of a swivel plate for the elevator assembly according to an embodiment of the disclosure.
FIG. 30 is another front view of the laser level bracket according to an embodiment of the disclosure.
FIG. 31 is another top view of the laser level bracket according to an embodiment of the disclosure.
FIG. 32 is another front view of the laser level bracket according to an embodiment of the disclosure.
FIG. 33 is another top view of the laser level bracket according to an embodiment of the disclosure.
FIG. 34 is a perspective view of a laser level according to an embodiment of the disclosure.
FIG. 35 is a bottom view of the laser level according to an embodiment of the disclosure.
FIG. 36 is a front view of the laser level according to an embodiment of the disclosure.
FIG. 37 is a perspective view of the laser level bracket with the laser level engaged therewith according to an embodiment of the disclosure.
FIG. 38 is a side view of the laser level bracket and laser level according to an embodiment of the disclosure.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

Features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counterclockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

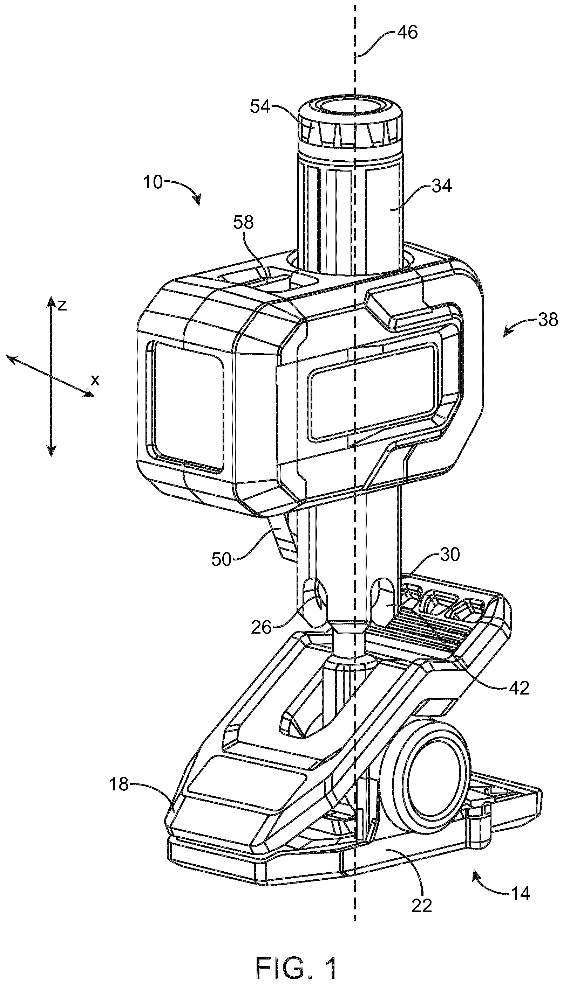

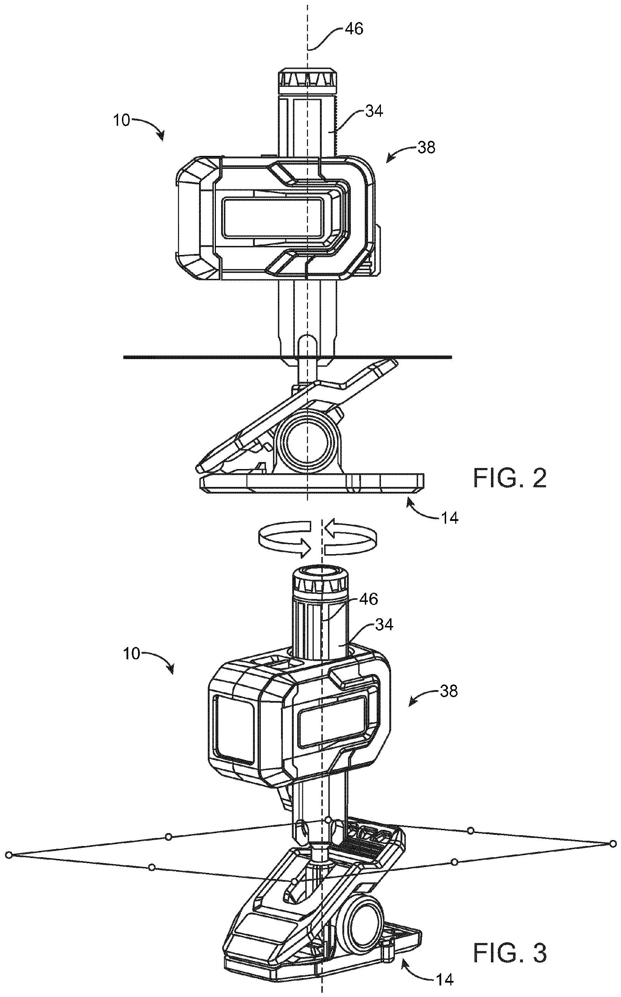

FIGS. 1-6 illustrate a self-leveling crossline laser level 10 that projects a laser onto a surface in the shape of a cross defining a focal point P having macro-adjustability in the x (e.g., horizontal) direction and micro-adjustability in both x (e.g., horizontal) and z (e.g., vertical) directions. The level 10 has a bracket or mount 14 including a clip 18 (e.g., a spring-loaded two-plate clip having a base 22) and a ball 26 received in a socket 30 of a main column or post 34 on which a level module 38 is slidably and rotatably movable. Rotation of the ball 26 within the socket 30 provides for macro adjustability (e.g., adjustability of the focal point P over distances greater than about 12 inches). The main column 34 includes castellations 42 that allow rotation of the socket 30 about the ball 26 up to about 90 degrees from vertical (e.g., from the axis 46, which may be substantially perpendicular or normal to a surface to which the level 10 is mounted) while limiting over-rotation. The castellations 42 also allow for a full range of motion (e.g. 360 degree rotation, shown by arrows in FIG. 3) of the socket 30, and thereby the level module 38, in the ball joint plane (e.g., a plane that intersects the ball 26 and which may be a horizontal plane relative to the surface to which the level 10 is coupled) illustrated in FIGS. 2 and 3. Returning to FIG. 1, a fastener 50 (e.g., a wing nut) is threadedly received in the main column 34 for securing the level 10 in a desired position for continued use without the need to adjust. A power source 54 (e.g., a 4V cylindrical style rechargeable Li-ion battery pack, although batteries having other styles, compositions, voltages, etc., may be used) may be slidably received within the main column 34 and electrically coupled to the level module 38. A switch 58 supported in the level module 38 operates the level module 38 (e.g., turns the level module on and off).

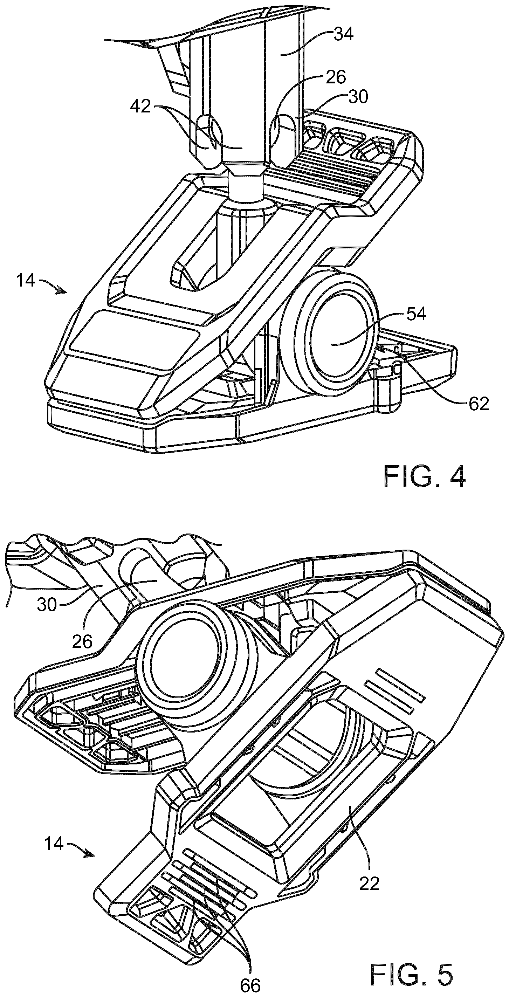

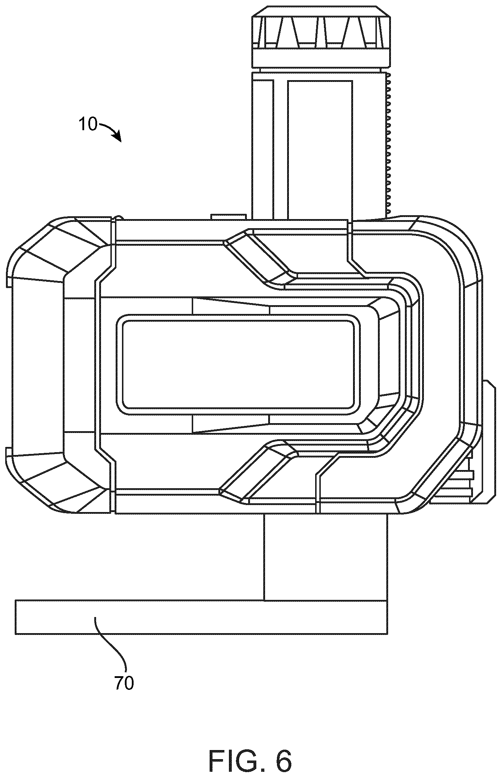

With continued reference to FIGS. 4-6, the mount 14 includes a receptacle 62 configured to receive the power source 54 for storage while not in use. The base 22 of the mount 14 may include magnets 66 that may be removably coupled to and stably support the level 10 on a metal surface. In other embodiments, the level 10 may include other styles of mounts (e.g., a flat plate mount 70, illustrated in FIG. 6).

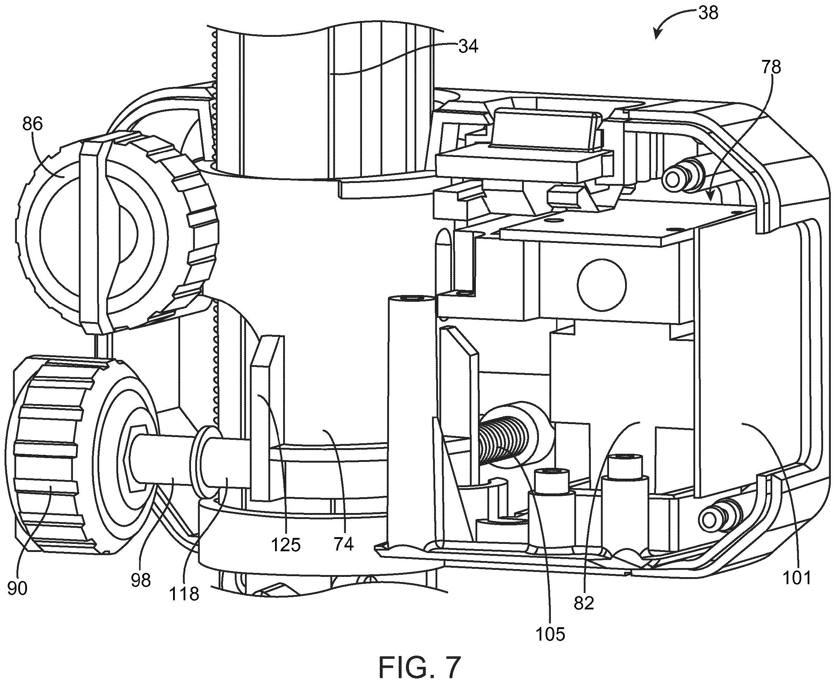

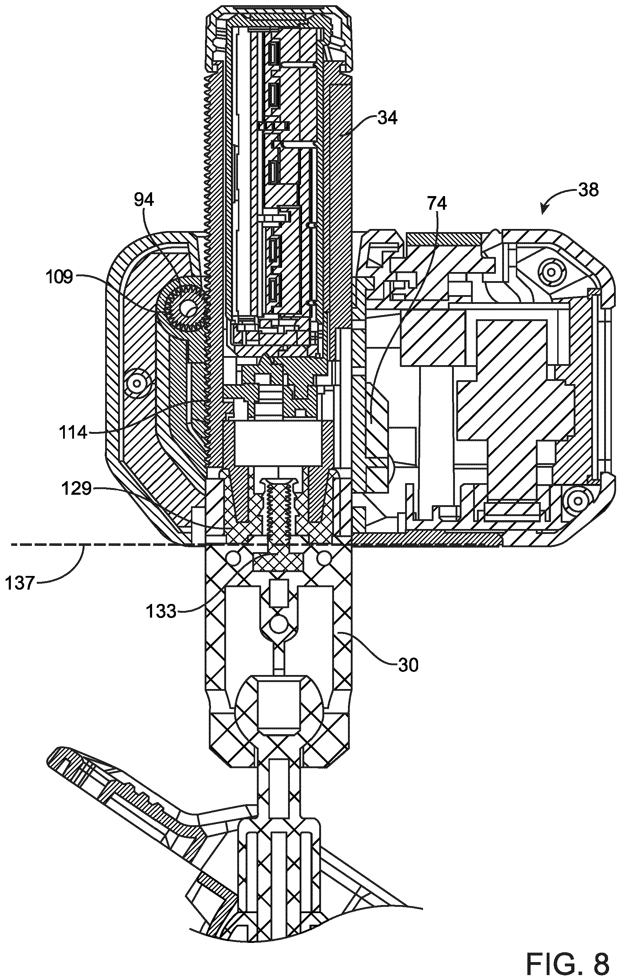

FIGS. 7-11 illustrate the level module 38 in greater detail. The level module 38 includes a carrier 74 slidably and rotatably supported on the main column 34, a gimble mount 78 coupled to a laser module 82, and adjustment knobs (first, or upper adjustment knob 86, and second, or lower adjustment knob 90). The first adjustment knob 86 has an upper post 94 (FIG. 8), and the second adjustment knob 90 has a lower post 98 (shown in FIG. 7). The first adjustment knob 86 is configured for micro-adjustment in a Z or vertical direction (e.g., adjustment of the focal point P in a vertical direction within a distance of about 2 inches), and the second adjustment knob is configured for micro-adjustment in an X or horizontal direction (e.g., adjustment, or sweep, of the focal point P in a horizontal direction within a distance of about 12 inches). The level module 38 may include a lens 101 supported adjacent the laser module 82 for focusing the laser module 82, in some embodiments. In other embodiments, the lens 101 may not be configured to focus light, such as the laser from the module 82. A compression spring 105 is supported in the level module 38 and engages the carrier 74 for rotatably biasing the carrier 74 about the main column 34.

The carrier 74 drives all micro-adjust movement of the laser level 10. That is, all movement of the laser level 10 in the X direction or the Z direction, or both, is achieved via the carrier 74. With reference to FIG. 8, the post 94 of the first knob 86 includes a pinion 109 that engages a rack 114 on the main column 34 for vertical displacement of the carrier 74, and thereby, the level module 38 and laser module 82. Returning to FIG. 7, rotation of the second, or lower, knob 90 by the user translates the post 98 into and out of the level module 38. As the post 98 is translated into the level module 38 by rotation of the lower knob 90 in a first direction, the end 118 of the post 98 engages a tab 125 extending from the carrier 74 thereby rotating the carrier 74 against the bias of the compression spring 105, or when the post is translated out of the level module 38 by rotation in the opposite, second direction, allowing the bias of the compression spring 105 to rotate the carrier 74 and the level module 38.

Returning to FIG. 8, an insert 129 is supported within the main column 34 and receives a coupling post 133 (e.g., a threaded insert or fastener with 1/4-20 threading) coupled to the socket 30 for coupling and decoupling the upper portion of the main column 34 from the socket 30. It will be appreciated that in this way, the upper portion of the main column 34 and the level module 38 are detachable from the mount 14 at a separation plane 137. By decoupling the upper portion of the main column 34, the level module 38 can be coupled to an external mounting structure (e.g., a tripod) or another mount (e.g., mount 70).

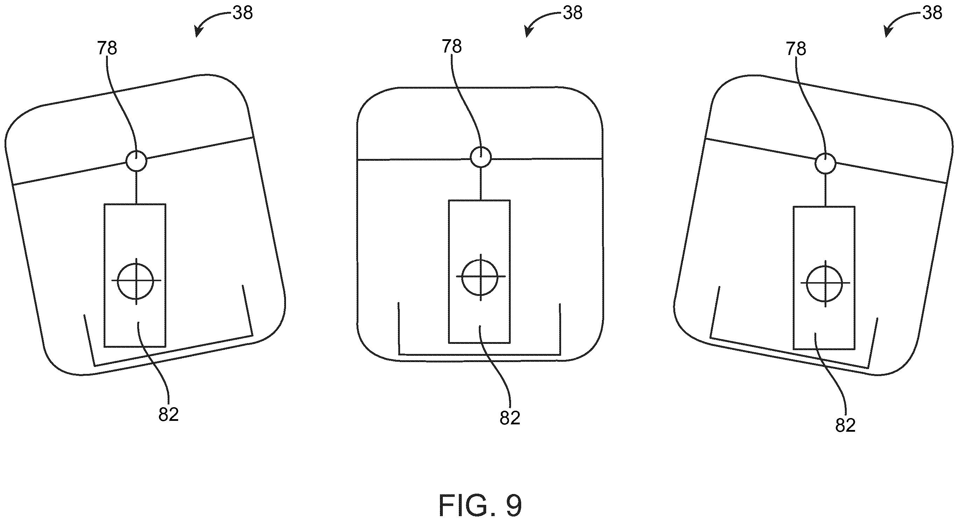

As illustrated in FIG. 9, the gimble mount 78 advantageously provides for self-leveling of the laser module 82 (e.g., self-leveling within 5 degrees of neutral) to ensure levelness. The gimble mount 78 may also be substantially frictionless.

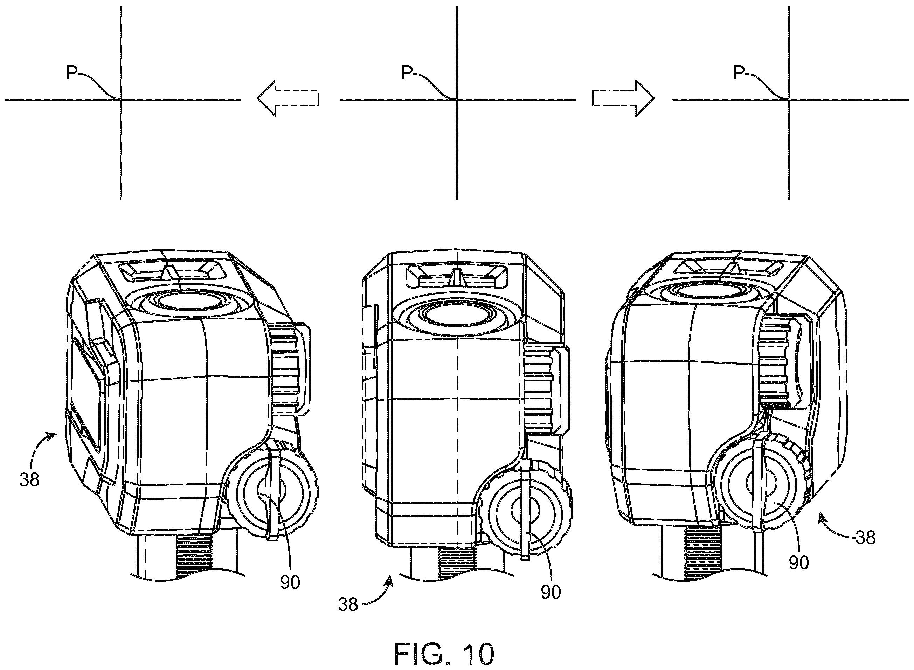

FIG. 10 illustrates horizontal micro adjustment of the level module 38. As illustrated, rotation of the lower knob 90 in a counterclockwise or clockwise direction translates the lower knob 90 into or out of the level module 38 and thereby overcomes the bias of the compression spring 105 or allows the compression spring 105 to rotate the carrier 74 about the main column 34.

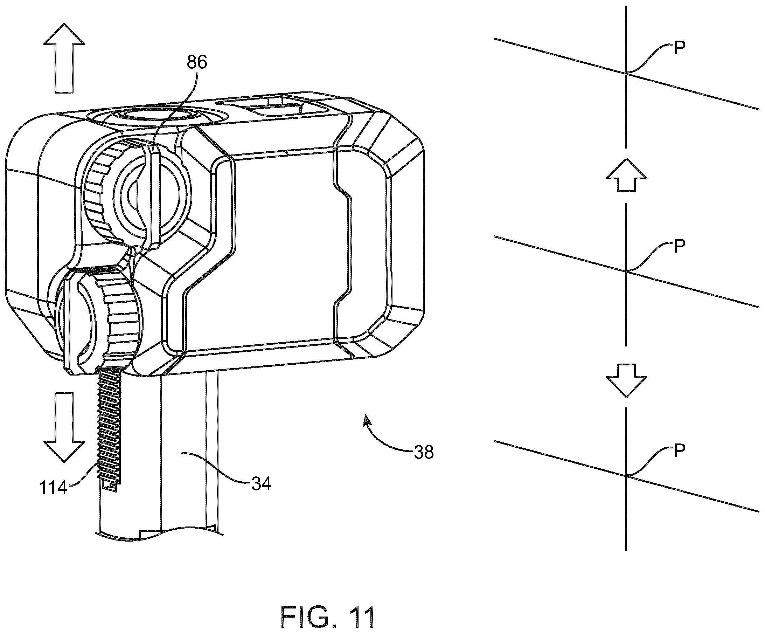

FIG. 11 illustrates vertical micro adjustment of the level module 38. Rotation of the first, or upper, knob 86 rotates the pinion 109 and translates the carrier 74 along the rack 114 with which the pinion 109 is engaged for vertical, or Z direction movement of the level module 38.

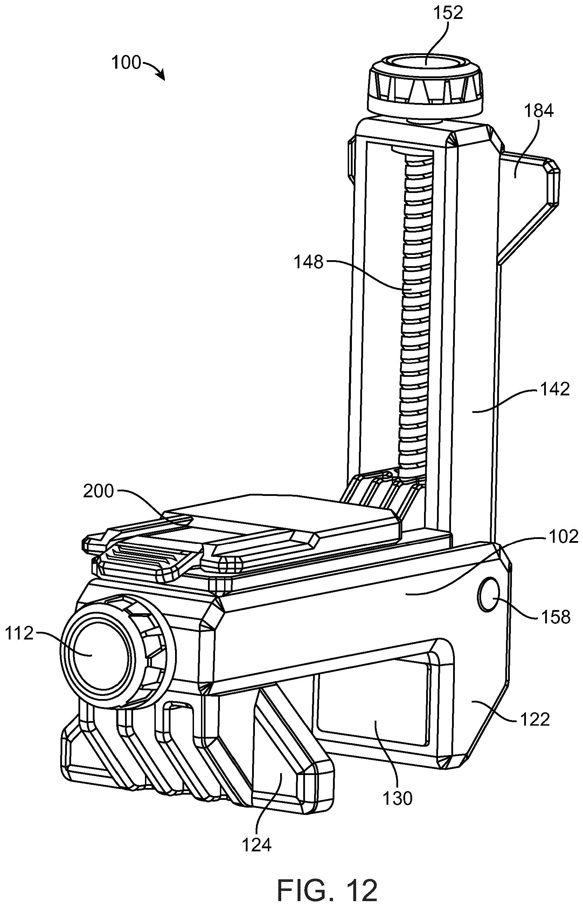

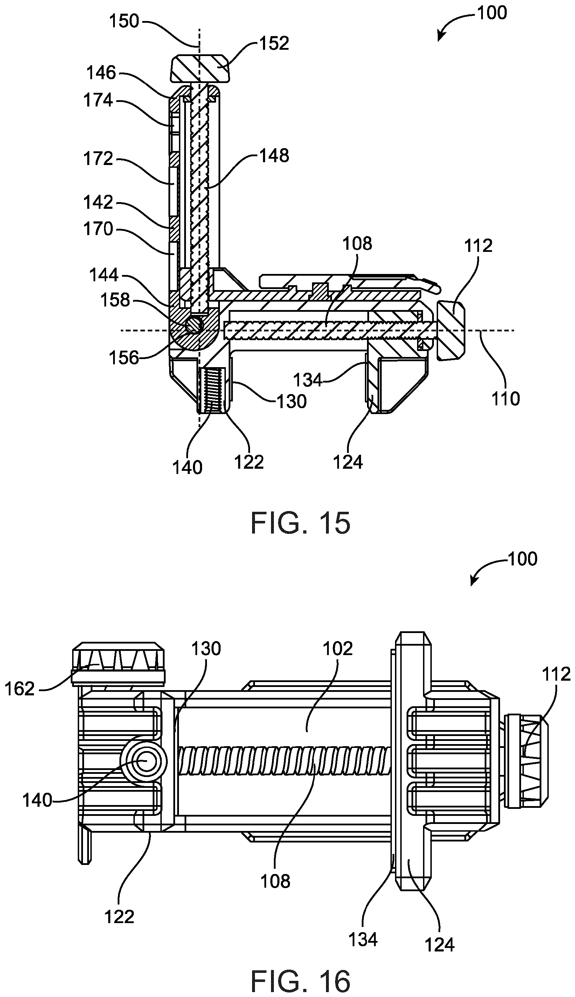

FIGS. 12 - 29 illustrate a laser level bracket 100 including a base 102 that has a proximal end 104 and a distal end 106. As best shown in FIGS. 15 - 17, a first shaft 108 extends through the base 102 along a first axis 110 from the proximal end 104 to the distal end 106 and through the distal end 106 so that a portion of the first shaft 108 extends beyond the distal end 106 of the base 102. As shown, the first shaft 108 is threaded. A first knob 112 is disposed on the first shaft 108 adjacent the distal end 106 of the base 102. As a user turns the first knob 112, the first shaft 108 rotates within the base 102 of the laser level bracket 100.

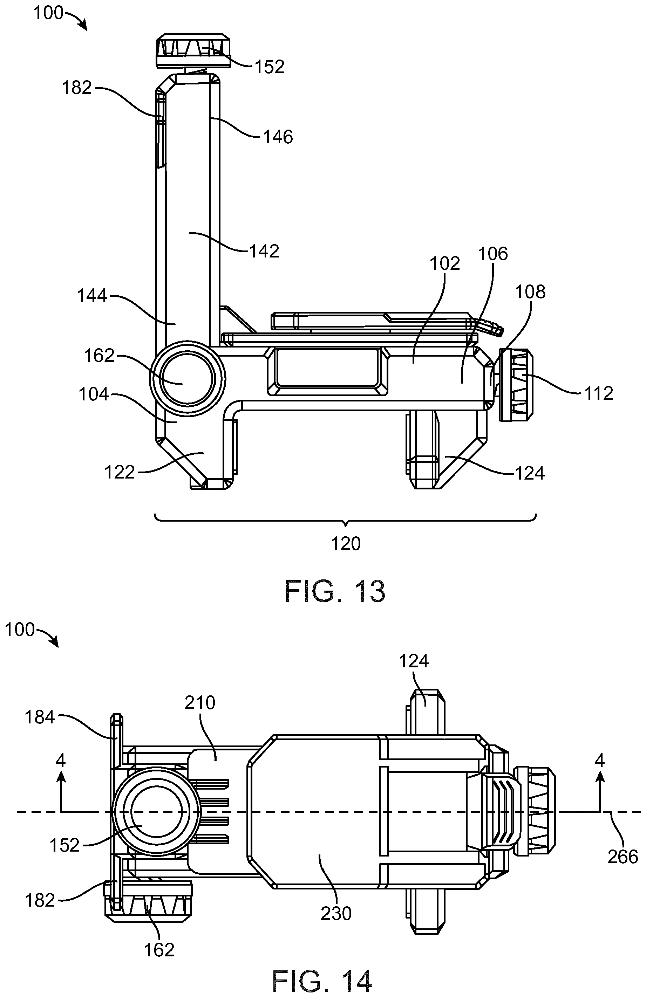

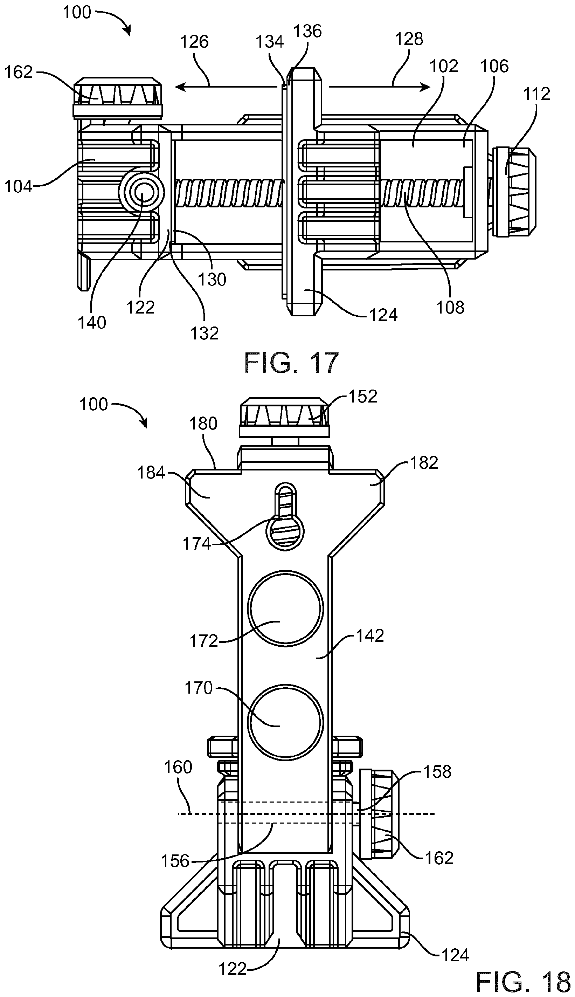

FIGS. 13 and 15 - 17 show that the proximal end 104 of the base 102 includes a clamp assembly 120 that extends in a generally downward direction from the base 102. As shown, the clamp assembly 120 includes a fixed jaw 122 formed at, or adjacent, the proximal end 104 of the base 102. The clamp assembly 120 further includes a moving jaw 124 that is mounted on the first shaft 108 such that as the first knob 112 is rotated, the moving jaw 124 moves toward and away from the fixed jaw 122. For example, as the first knob 112 is rotated clockwise, the moving jaw 124 moves toward the fixed jaw 122 as indicated by arrow 126 in FIG. 17 to decrease the distance D between the fixed jaw 122 and the moving jaw 124. Further, as the first knob 112 is rotated counterclockwise, the moving jaw 124 moves away from the fixed jaw 122 as indicated by arrow 128 in FIG. 17 to increase the distance D between the fixed jaw 122 and the moving jaw 124. The opposite configuration could also be employed such that the counterclockwise rotation of the first knob 112 causes movement of the moving jaw 124 toward the fixed jaw 122 and clockwise rotation of the first knob 112 causes movement of the moving jaw 124 away from the fixed jaw 122, for example, if the orientation of the threading on first shaft 108 were reversed from that shown in FIGS. 16 and 17 (and the corresponding threaded receiver of moving jaw 124). Accordingly, in either configuration, the moving jaw 124 may be moved away from and toward the fixed jaw 122 to allow the clamp assembly 120 to be fitted over a stationary structure and clamped thereto to attach the laser level bracket 100 to the stationary structure during use.

As shown in FIGS. 15 - 17, the fixed jaw 122 includes a first pad 130 affixed to, or disposed on, an inner face 132 of the fixed jaw 122. The moving jaw 124 includes a second pad 134 disposed on, or affixed to, an inner face 136 of the moving jaw 124. The pads 130, 134 may be made from a relatively soft polymer to provide extra grip between the clamp assembly 120 and the stationary structure over which it is attached during use. For example, the polymer may include an elastomer such as a saturated rubber, an unsaturated rubber or a combination thereof. The unsaturated rubbers include, for example, natural rubber, natural polyisoprene, isoprene rubber (IR), butadiene rubber (BR), chloroprene rubber (CR), polychloroprene, neoprene, butyl rubber, halogenated butyl rubber, styrene-butadiene rubber (SBR), nitril rubber, hydrogenated nitrile rubbers (HNBR), or a combination thereof. The saturated rubbers include, for example, ethylene propylene rubber (EPM), ethylene propylene diene rubber (EPDM), epichlorohydrin rubber, polyacrylic rubber, silicone rubber, fluorosilicone rubber, a fluoroelastomer, a perfluoroelastomer, polyether block amide (PEBA), chlorosulfonated polyethylene, ethylenevinyl acetate (EVA), or a combination thereof.

FIGS. 15 - 17 further illustrate that the base 102 includes a threaded bore 140 that extends into the fixed jaw 122. As shown, the threaded bore 140 is substantially perpendicular to the first axis 110. The threaded bore 140 may be formed with 1/4-20 unified national coarse (UNC) threads, 3/8-16 (UNC) threads, or similar threads, to allow the threaded bore 140 to receive and engage a complementary threaded bolt from a tripod, or similar device, to allow the laser level bracket 100 to be disposed on a tripod or similar device.

FIGS. 15 and 17 show that the laser level bracket 100 includes a support column or post 142 that extends from the base 102. As illustrated, the support post 142 includes a proximal end 144 and a distal end 146. As best shown in FIGS. 12, 15, 22, and 23, a second shaft 148 extends through the support post 142 along a second axis 150 from the proximal end 144 to the distal end 146 and through the distal end 146 so that a portion of the second shaft 148 extends beyond the distal end 146 of the support post 142. In an embodiment, the second shaft 148 is threaded. A second knob 152 is disposed on the second shaft 148 adjacent the distal end 146 of the support post 142. As a user turns the second knob 152, the second shaft 148 rotates within the support post 142 of the laser level bracket 100.

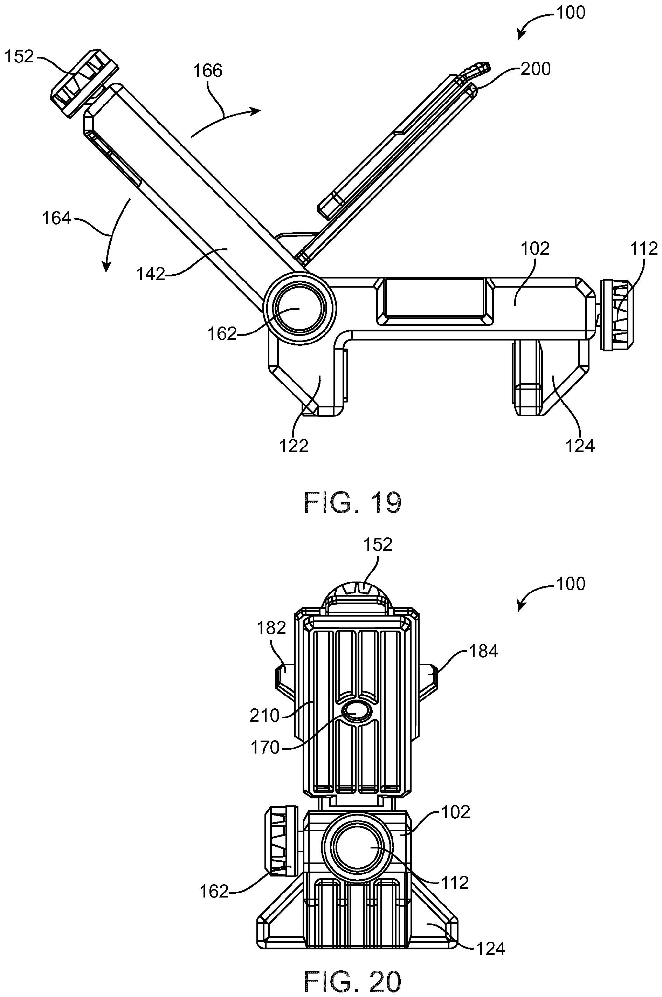

Referring now to FIG. 18, the laser level bracket 100 is formed with a lateral bore 156 that extends through the proximal end 104 of the base 102 and the proximal end 144 of the support post 142. A third shaft 158 extends through the lateral bore 156 along a third axis 160 and includes a third knob 162. The third shaft 158 rotatably or pivotably couples the support post 142 to the base 102, and, as shown in FIGS. 19 and 20, allows the support post 142 to move relative to the base 102 as indicated by arrows 164 and 166. In particular, the support post 142 is rotatable with respect to the base 102 between approximately a ninety-degree (90°) angle relative to the base 102 and approximately a one-hundred-eighty-degree (180°) angle relative to the base 102. To lock the support post 142 in a particular angle relative to the base 102, a user rotates the third knob 162 clockwise to tighten the proximal end 104 of the base 102 around the proximal end 144 of the support post 142. To unlock the support post 142 to allow it to move relative to the base 102, a user rotates the third knob 162 counterclockwise.

Referring back to FIG. 18, the support post 142 includes a first magnet 170 and a second magnet 172 disposed therein. The illustrated magnets 170, 172 are rare-earth magnets that are made from alloys of rare-earth elements. For example, the magnets 170, 172 may be neodymium magnets, samarium-cobalt magnets, or a combination thereof. During use, the magnets 170, 172 allow the laser level bracket 100 to be removably engaged with a metal surface (e.g., a metal wall stud). The support post 142 also includes a keyhole slot 174 formed near the distal end 146 of the support post 142 that allows the laser level bracket 100 to be hung on a screw head or a nail head during use. The support post 142 further includes a Y bracket 180 formed on the distal end 146 of the support post 142. The Y bracket 180 includes a first wing structure 182 that extends outwardly from a first side of the distal end 146 of the support post 142 in a first direction and defines a generally truncated triangular shape. The Y bracket 180 also includes a second wing structure 184 that extends outwardly from a second side of the distal end 146 of the support post 142 in a second direction opposite the first direction of the first wing structure 182. The second wing structure 184 also defines a generally truncated triangular wing shape that is a mirror-image of the shape of the first wing structure 182. The Y bracket 180 is configured to slide into a complementary shaped groove or space of a storage system and, during use, the Y bracket 180 allows the laser level bracket 100 to be mounted in a structure or device formed with such a complementary shaped groove. As shown, the keyhole slot 174 is formed between the wing structures 182, 184 of the Y bracket 180, and the magnets 170, 172 are disposed in an outer surface of the support post 142 below the keyhole slot 174. The keyhole slot 174 and the magnets 170, 172 are aligned along a central axis of the support post 142.

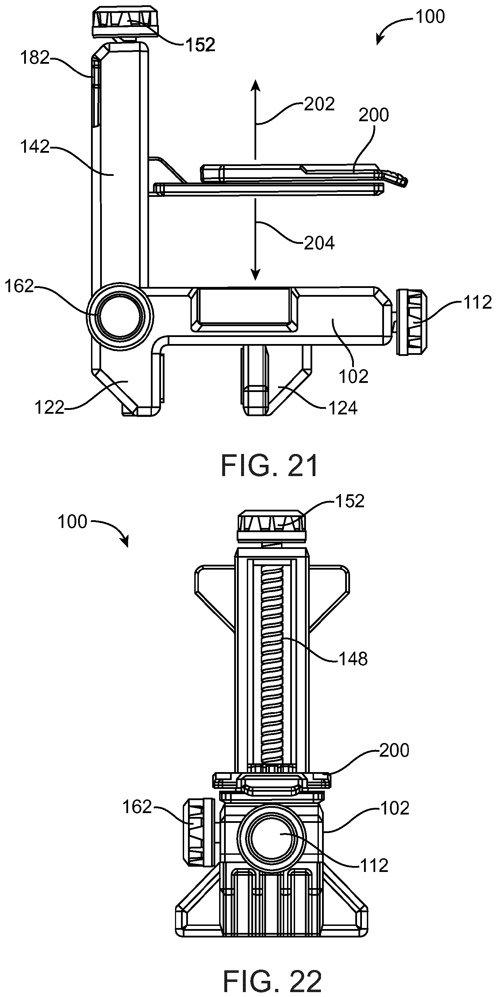

As shown in FIGS. 19 and 21 - 23, the laser level bracket 100 includes an elevator assembly 200 mounted on the second shaft 148 within the support post 142. As the second knob 152 is rotated clockwise, the elevator assembly 200 moves away from the base 102 as indicated by arrow 202 (FIG. 21). As the second knob 152 is rotated counterclockwise, the elevator assembly 200 moves toward the base 102 as indicated by arrow 204 (FIG. 21). The opposite configuration could also be employed such that the counterclockwise rotation of the second knob 152 causes movement of the elevator assembly 200 away from the base 102 and clockwise rotation of the second knob 152 causes movement of the elevator assembly 200 toward the base 102, for example, if the orientation of the threading on second shaft 148 were reversed from that shown in Figs. 12, 18, 22, 23, 26, 30, and 32 (and the corresponding threaded receiver of elevator assembly 200).

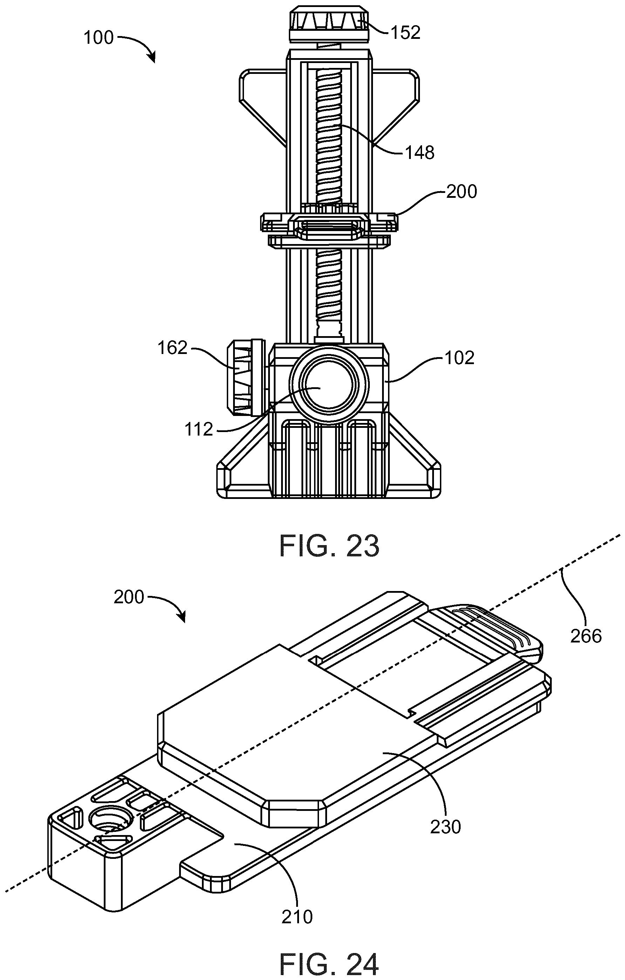

FIGS. 24 - 29 illustrate that the elevator assembly 200 includes a support plate 210 (e.g., generally rectangular) that has a proximal end 212, a distal end 214, an upper surface 216, and a lower surface 218. A support collar 220 extends from the proximal end 212 of the support plate 210. The support collar 220 includes a threaded bore 222 that extends therethrough and that receives the second shaft 148. As the second shaft 148 rotates, the support collar 220 moves along the second shaft 148. The support plate 210 further includes a generally cylindrical lower bearing hub 224 that extends from the upper surface 216 of the support plate 210.

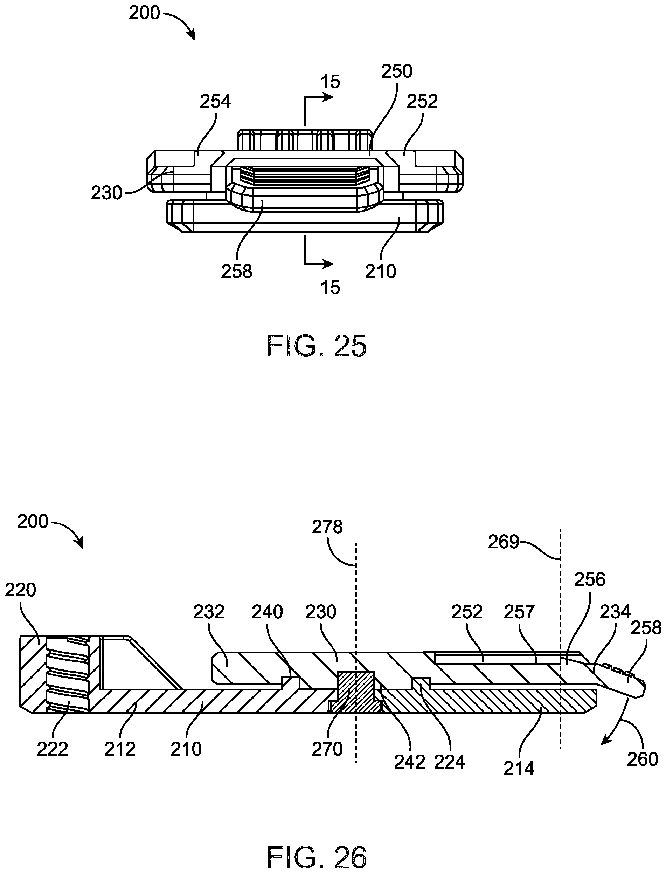

FIGS. 24 - 27 and 29 further show that the elevator assembly 200 includes a swivel plate 230 that is rotatably mounted on the support plate 210. The swivel plate 230 includes a proximal end 232, a distal end 234, an upper surface 236, and a lower surface 238. The lower surface 238 of the swivel plate 230 includes a circular groove 240 that circumscribes an upper bearing hub 242 that extends from the lower surface 238 of the swivel plate 230. The circular groove 240 is sized and shaped to receive the lower bearing hub 224 of the support plate 210 therein. Further, the upper bearing hub 242 fits into the lower bearing hub 224 and rotates therein. As shown in FIG. 24 and 25, the swivel plate 230 includes a pocket 250 formed in the upper surface 236 of the swivel plate 230 that extend at least partially along the length of the swivel plate 230. The pocket 250 is flanked by a first rail 252 and a second rail 254 that also extend partially along the length of the swivel plate 230. The pocket 250 and rails 252, 254 are configured to receive and engage complementary features on the base of a laser level, described below. Specifically, the pocket 250 is generally trapezoid in shape when viewed from the end, as in FIG. 25, to form a trapezoidal tail socket for a sliding dovetail joint.

As best illustrated in FIG. 26, the swivel plate 230 includes a ramped structure 256 adjacent the distal end 234 of the swivel plate 230 that extends upward from a bottom 257 of the pocket 250. As shown, the ramped structure 256 also extends laterally between the first rail 252 and the second rail 254. The ramped structure 256 is configured to fit into, and engage, a complementary shaped groove formed in the base of a laser level, described below, to maintain laser level engagement with the swivel plate 230 when the laser level is engaged with the laser level bracket 100. FIGS. 24-29 further show that the elevator assembly 200 includes a tab 258 that extends outward from the distal end 234 of the swivel plate 230 at a slight angle A relative to the upper, or lower, surface 236, 238 of the swivel plate 230. The angle A is approximately twenty degrees (20°). During use, the tab 258 may be pressed downward in order to flex the distal end 234 in a generally downward direction (as indicated by arrow 260 in FIG. 26) to disengage the ramped structure 256 from the corresponding groove formed in the bottom portion of the laser level to allow the laser level to be removed from the laser level bracket 100. More specifically, when a user applies a force to the tab 258 in a downward direction, the force causes at least a portion of the distal end 234 of the swivel plate 230 to flex downward a distance D that is least the same as a height H of the ramped structure 256. It is to be understood that D and H are measured along an axis 269 that extends through the upper vertex of the ramped structure 256.

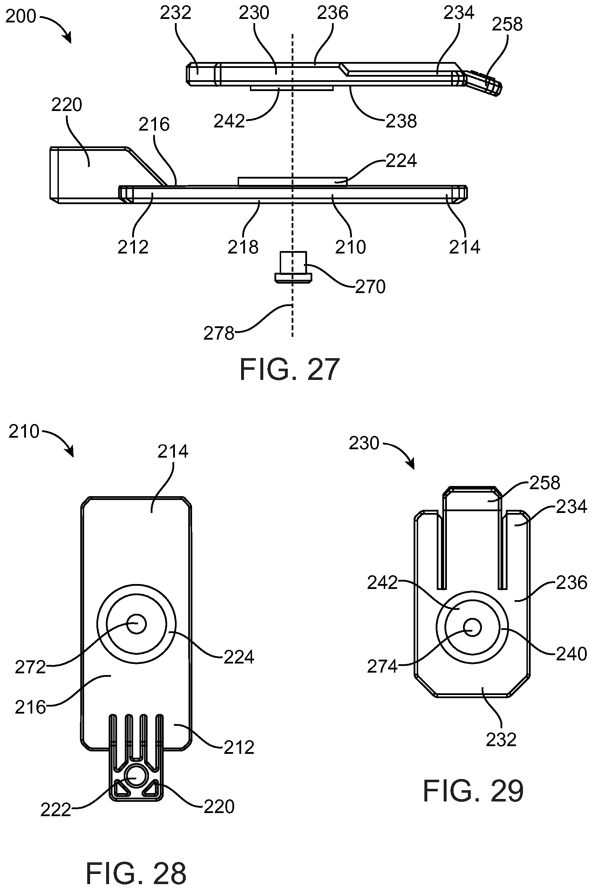

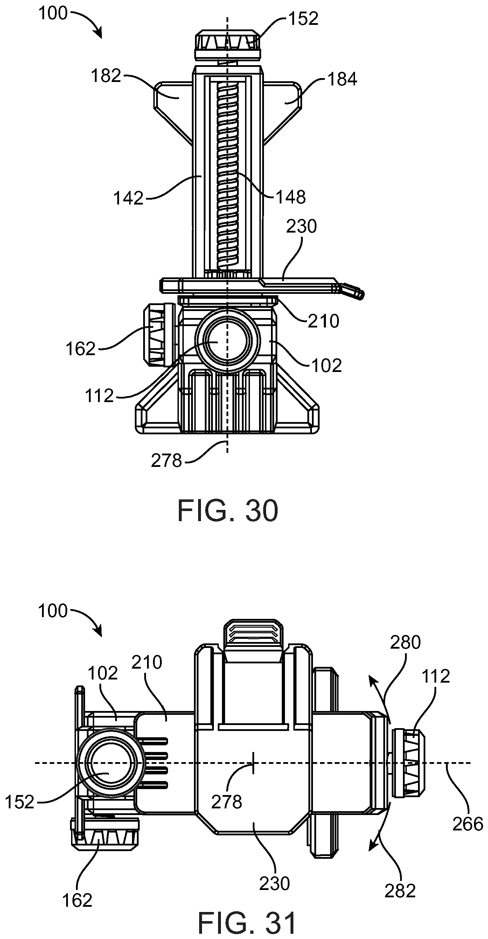

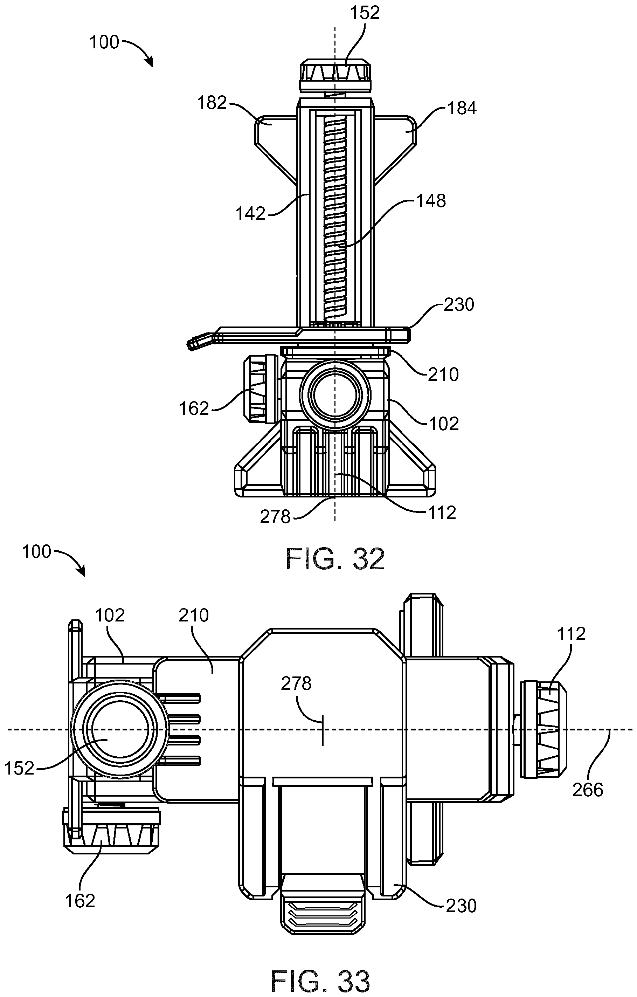

As shown in FIGS. 26 and 27, the elevator assembly 200 further includes a post 270 that extends through a lower smooth bore 272 formed in the support plate 210 and is press fit into an upper smooth bore 274 that extends partially into the lower surface 238 of the swivel plate 230. The post 270 rotatably couples the swivel plate 230 to the support plate 210. Accordingly, as shown in FIG. 30 - 33, the swivel plate 230 may rotate on the support plate 210 between different positions. For example, the swivel plate 230 may rotate about a fourth axis 278 extending through the center of the post 270 from a position in which the swivel plate 230 is aligned with the support plate 210 along a longitudinal axis 266 (as shown in FIG. 14) to different angular positions over a range of approximately zero degrees (0°) to two-hundred-ninety degrees (290°) from one side of the support post 142 to the other side of the support post 142. As best shown in FIGS. 31 and 33, during operation, the swivel plate 230 may be rotated about the fourth axis 278, as indicated by arc 280 and arc 282, so that the swivel plate 230 is perpendicular to the longitudinal axis 266 in either direction relative to the support plate 210, or beyond perpendicular relative to the longitudinal axis 266.

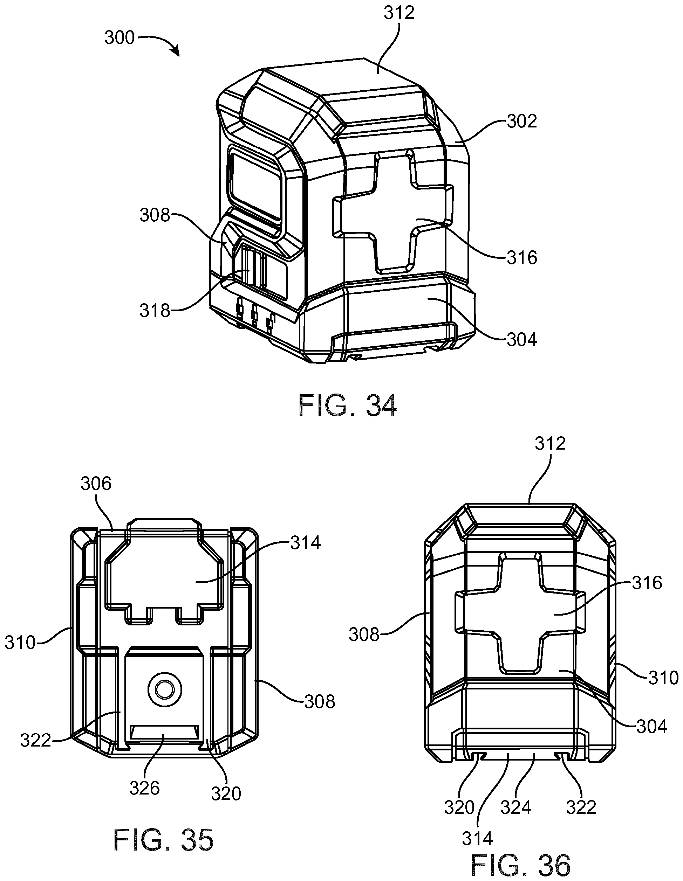

FIGS. 34 - 36 illustrate a laser level 300 that may be coupled to the laser level bracket 100. As shown, the laser level 300 includes a housing 302, that includes a front portion 304, a rear portion 306, a first side portion 308, a second side portion 310, a top portion 312, and a bottom portion 314. The front portion 304 includes a window 316 through which one or more laser beams are projected. The first side portion 308 includes an on/off switch 318. The interior of the housing 302 includes the electronics, etc. that are required to produce the one or more laser beams that are projected through the window 316 in the front portion 304. As shown, the bottom portion 314 of the laser level 300 is formed with a pair of grooves 320, 322 that flank a trapezoidal tail 324. The trapezoidal tail 324 is configured to fit into the trapezoidal tail socket formed by the pocket 250 within the swivel plate 230 of the elevator to establish a sliding dovetail joint. The grooves 320, 322 and the trapezoidal tail 324 extend at least partially along the length of the bottom portion 314 of the laser level 300. The bottom portion 314 further includes a ramped groove 326 that extends into the bottom portion 314 and extends laterally between the grooves 320, 322. The ramped groove 326 is formed in the bottom portion 314 near, or adjacent, the front portion 304 of the laser level 300.

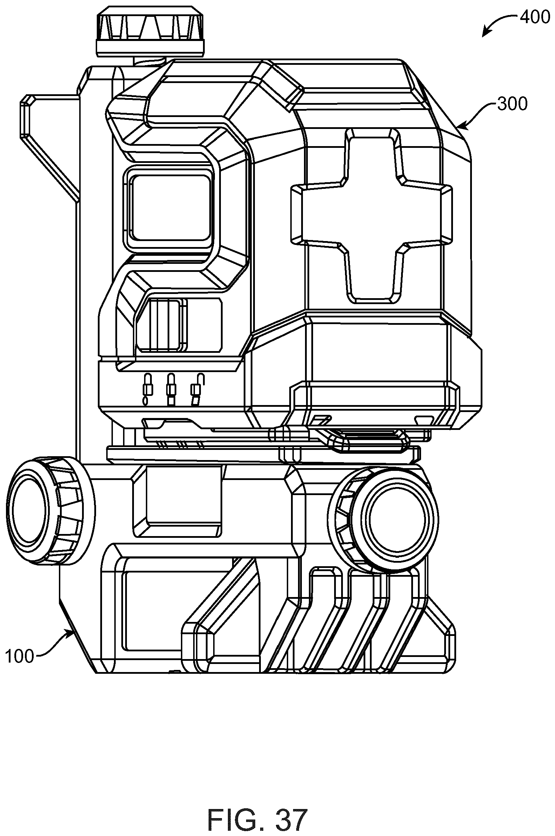

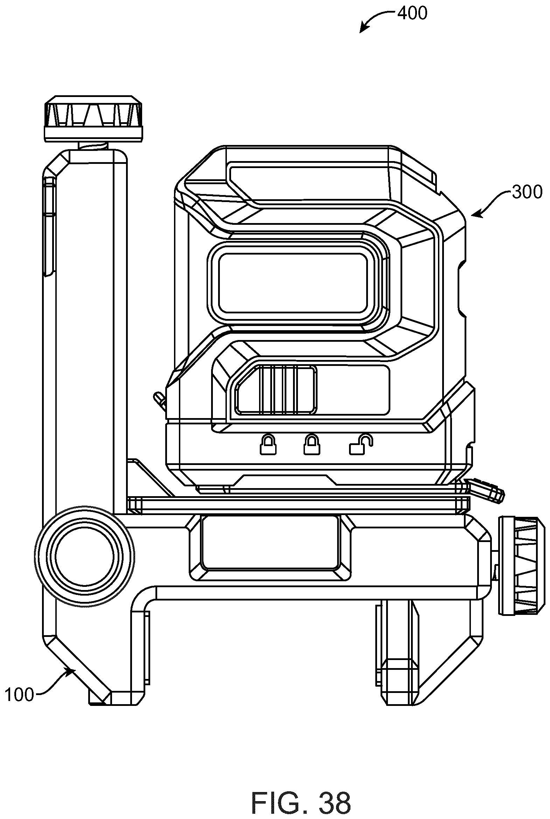

FIGS. 37 and 38 depict an assembly 400 that includes the laser level bracket 100 and the laser level 300. As shown, to engage the laser level 300 with the laser level bracket 100, the trapezoidal tail 324 of the laser level 300 is fitted into the trapezoidal tail socket formed in the swivel plate 230 (by the pocket 250). In effect, the rails 252, 254 formed in the swivel plate 230 slide into the grooves 320, 322 formed in the bottom portion 314 of the housing 302. With reference to FIGS. 37 and 38, to fully engage the laser level 300 with the laser level bracket 100, the laser level 300 is slid relative the swivel plate 230 until the ramped structure 256 on the swivel plate 230 snaps into and engages the ramped groove 326 formed in the bottom portion 314 of the housing 302. To disengage the laser level 300 from the laser level bracket 100, the user presses down the tab 258 to move the ramped structure 256 on the swivel plate 230 out of, or away from, the ramped groove 326 on the bottom portion 314 of the housing 302 of the laser level 300 to allow the laser level 300 to slide off of the swivel plate 230 of the laser level bracket 100.

It is to be understood that when the laser level 300 is coupled with the laser level bracket 100, the laser level 300, the support post 142, and the elevator assembly 200 are rotatable about a horizontal axis (e.g., the third axis 160 of the laser level bracket 100) to change the altitude of the laser level 300 and the elevator assembly 200 relative to the base 102 of the laser level bracket 100. When the laser level 300 is coupled to the laser level bracket 100, the laser level 300 and the swivel plate 230 are rotatable about a vertical axis (e.g., the fourth axis 278) to change the azimuth of the laser level 300 and the swivel plate 230 relative to the base 102 of the laser level bracket 100. This rotation may be in conjunction with or separate from other pivotal or rotational movement or adjustment provided by the laser level bracket 100. When the second knob 152 on the support post 142 is rotated clockwise and counterclockwise, the laser level 300 and the elevator assembly 200 are raised and lowered relative to the base 102 of the laser level bracket 100. This movement may be in conjunction with or separate from other movement or adjustment provided by the laser level bracket 100.

In a particular aspect, one or more of the components of the laser level bracket 100 and the laser level 300 may be made from a polymer, such as, for example, ultra-high molecular weight polyurethane (UHMWPE), poly(vinyl chloride) (PVC), a polyketone, a polyaryletherketone (PEAK) such as polyether ether ketone (PEEK), a polyamide, a polyimide, a polytherimide, a polyphenylene sulfide, a polyethersulfone, a polysulfone, a polypheylene sulfone, a polyamideimide, ultra high molecular weight polyethylene (UHMWP), acrylonitrile butadiene styrene (ABS), a fluoropolymer, a polyamide, a polybenzimidazole, or any combination thereof. An example fluoropolymer includes fluorinated ethylene propylene (FEP), polytetrafluoroethylene (PTFE), polyvinylidene fluoride (PVDF), perfluoroalkoxy (PFA), polychlorotrifluoroethylene (PCTFE), ethylene tetrafluoroethylene copolymer (ETFE), ethylene chlorotrifluoroethylene copolymer (ECTFE), aliphatic polyamides, or any combination thereof.

Although the disclosure has been described in detail with reference to certain preferred embodiments, variations and modifications exist within the scope and spirit of one or more independent aspects of the disclosure as described.

For example, it will be appreciated that other shapes of a swivel plate and/or other connection features of a swivel plate might be employed to accommodate and mate with a differently shaped or configured laser level or other tool than what is illustrated in the embodiments described herein. As another example, it will be appreciated that shapes other than the described wing structure 182, 184 of Y bracket 180 might be employed to slide within a differently shaped or configured receiver of a storage system or other mount.

## Claims

1. A laser level comprising:
a base configured to support a level module relative to a structure; and
a post coupled to the base;
wherein the level module is adjustable on the laser level to i) translate along a first axis, ii) rotate about a second axis parallel to the first axis, and iii) move with the post relative to the base in a direction different from an extension direction of the first axis and the second axis.

2. The laser level of claim 1, wherein the base and the post are coupled to each other by a ball and socket joint configured to permit movement of the post up to approximately 90 degrees relative to the first axis and 360 degrees around the first axis.

3. The laser level of claim 1, wherein the base includes a first plate configured to engage a flat surface and a second plate coupled to the first plate, and wherein the first plate and the second plate define a spring-loaded clip.

4. The laser level of claim 1, further comprising at least one magnet coupled to one or both of the base and the post.

5. The laser level of claim 1, wherein the base includes a first jaw and a second jaw movable relative to the first jaw to attach the level module to the structure and to a different-sized structure.

6. The laser level of claim 1, wherein the first axis and the second axis are the same.

7. The laser level of claim 1, wherein the post is pivotable about a third axis extending perpendicular to the first axis.

8. The laser level of claim 1, further comprising a swivel plate movably coupled to the post and rotatable about the second axis;
and/or
the swivel plate is pivotable with the post about a third axis perpendicular to the first axis;
and/or
the swivel plate is coupled to the post by a support plate, and wherein the support plate has a first hub and the swivel plate has a second hub rotatable within the first hub.

9. A laser level comprising:
a base configured to support a level module relative to a structure;
a post coupled to the base; and
a support assembly configured to adjustably support the level module on the post, the support assembly including an adjustment structure configured to adjust an orientation of the level module in a first direction and in a second direction different from the first direction, and the support assembly further movable with the post relative to the base.

10. The laser level of claim 9, wherein the support assembly is attached to the post and configured to couple the level module to the post, wherein the support assembly is translatable along the post relative to the base, and wherein the support assembly is rotatable relative to the base about different axes of rotation.

11. The laser level of claim 9, wherein the support assembly includes a carrier slidably and rotatably supported on the post, and wherein the carrier includes the adjustment structure having a first knob configured to micro-adjust an orientation of the level module in a first plane, and a second knob configured micro-adjust the orientation of the level module in a second plane different from the first plane.

12. The laser level of claim 9, wherein the support assembly includes at least one plate attached to the post, wherein the at least one plate is operably connected to the post for translation along the post, and wherein the at least one plate is rotatable with the post relative to the base;
and/or
wherein the at least one plate is rotatable relative to the post.

13. The laser level of claim 9, wherein the post includes a rack and the support assembly includes a pinion adjustable along the rack to vary an orientation of the level module relative to the base.

14. The laser level of claim 9, wherein the support assembly is translatable along the post relative to the base, and wherein the support assembly is rotatable relative to the base about different axes of rotation.

15. The laser level of claim 9, wherein the adjustment structure includes a first knob configured to adjust the orientation of the level module in the first direction, and a second knob configured adjust the orientation of the level module in the second direction;
and/or
wherein the adjustment structure is coupled to the post to provide micro-adjustability in the first direction and the second direction, and the post is rotatable relative to the base to provide macro-adjustability of the level module.
